# EUROPÄISCHE PATENTANMELDUNG

(11) **EP 1 281 588 A2**
(43) Veröffentlichungstag der Anmeldung: **05.02.2003**
(21) Anmeldenummer: 02016771.4
(22) Anmeldetag: 26.07.2002
(51) Int. Cl.: B60R 25/00

(54) **Verfahren zum Übertragen eines Öffnungscodes, Verfahren zum Übertragen eines Verschlusscodes und zugehörige Einheiten**

(30) Priorität: 01.08.2001 DE 10137579
(71) Anmelder: SIEMENS AKTIENGESELLSCHAFT, 80333 München (DE)
(72) Erfinder: Gundlach, Michael, Dr., 81739 München (DE)

(57) **Zusammenfassung**

Erläutert wird ein Verfahren, bei dem ein Transportmittel (10) unter Nutzung eines Mobilfunknetzes (12) vermietet oder zurückgegeben wird. Zur Authentifizierung des Nutzers des Transportmittels (10) werden die im Mobilfunknetz (12) verfügbaren Verfahren eingesetzt.

## Beschreibung

Verfahren zum Übertragen eines Öffnungscodes, Verfahren zum Übertragen eines Verschlusscodes und zugehörige Einheiten

Die Erfindung betrifft ein Verfahren, bei dem ein Transportmittel mit einem Kennzeichen versehen wird, das es von anderen Transportmitteln unterscheidet. Das Transportmittel wird mit einem Codeschloss versehen, welches abhängig von einem Öffnungscode geöffnet werden kann.

Das Codeschloss ist beispielsweise ein elektronisches Schloss, das nach Eingabe einer Tastenkombination geöffnet wird. Es sind elektronische Schlösser bekannt, bei denen sich der Öffnungscode beispielsweise bei jedem Verriegelungsvorgang ändert. Der richtige Öffnungscode lässt sich beispielsweise nach einer mathematischen Funktion berechnen, die auch im Codeschloss zur Überprüfung des Öffnungscodes ausgeführt wird. Das Transportmittel ist beispielsweise ein Kraftfahrzeug, ein Fahrrad oder ein Anhänger.

Durch die Firma "Call a Bike", siehe die Web-Seite mit der Adresse "http://www.callabike.de", ist ein Verfahren zum Übertragen eines Öffnungscodes bekannt, bei dem der Nutzer eines Fahrrades über eine öffentliche Telefonzelle eine Festnetzverbindung zu einem Servicecenter des Vermieters aufbaut. Über diese Verbindung wird ein am Fahrrad aufgedrucktes Kennzeichen in Sprachform übertragen. Außerdem muss der Nutzer einen ihm vom Vermieter zugeordneten Code nennen. Im Servicecenter überprüft eine Bedienperson die Gültigkeit des Codes und des Kennzeichens. Abhängig vom Kennzeichen wird einen Öffnungscode für das Codeschloss ermittelt. Der Öffnungscode wird über die Verbindung zum Nutzer übertragen, beispielsweise durch eine Ansage der Bedienperson. Mit der Übertragung des Öffnungscodes beginnt die zu entgeltende Nutzungszeit.

Bei einer Vermietung über den Vermieter "Call a Bike" muss das Fahrrad auch wieder an einer öffentlichen Telefonzelle zurückgegeben werden. Der Nutzer schließt sein Fahrrad mit Hilfe des Codeschlosses an. Das Codeschloss gibt eine Bestätigungszahlenfolge aus, die sich der Nutzer notieren muss. Anschließend ruft der Nutzer wieder das Servicecenter des Vermieters an und meldet die Bestätigungszahlenfolge sowie den Standort des Fahrrades. Ist die Bestätigungsfolge in Ordnung, so wird die Berechnung von Gebühren für den Nutzer unterbrochen.

Das bekannte Verfahren bietet nur einen unzureichenden Schutz gegen Betrug. Außerdem ist die Bindung des Abholortes und des Rückgabeortes an öffentliche Telefonzellen hinderlich.

Es ist Aufgabe der Erfindung, ein einfaches Verfahren zum Übertragen eines Öffnungscodes anzugeben, das insbesondere einen Missbrauch erschwert und eine freie Wahl des Abhol- bzw. Abgabeortes des Transportmittels ermöglicht. Außerdem soll ein Verfahren zum Übertragen eines durch das Codeschloss erzeugten Verschlusscodes angegeben werden. Weiterhin betrifft die Erfindung ein zugehöriges Endgerät und einen zugehörigen Diensterbringungsrechner.

Die auf das Verfahren zum Übertragen eines Öffnungscodes bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass Ausgabeort bzw. Abholort und Rückgabeort flexibel gewählt werden können, wenn an Stelle der Telefone eines Festnetzes Endgeräte eines Mobilfunknetzes verwendet werden, d.h. sogenannte Handies. Im Mobilfunknetz gibt es außerdem sehr leistungsfähige Authentifizierungsverfahren, die eine Identifizierung des Nutzers ohne zusätzlichen Mehraufwand ermöglichen. So enthält jedes Endgerät eine SIM-Karte (Subscriber Identity Module). Auf dieser Karte ist unter anderem die Rufnummer des Endgerätes vermerkt. Das Mobilfunknetz ist beispielsweise ein GSM-Mobilfunknetz oder ein gemäß einem anderen Standard arbeitendes Mobilfunknetz, z.B. gemäß einem in der USA oder in Japan geltenden Standard.

Beispielsweise werden bei einem A3 genannten Authentisierungsverfahren im GSM-Mobilfunknetz mit Hilfe eines sogenannten "Challenge and Response Protocols" sicherheitsrelevante Daten zwischen mobilem Teilnehmer und Basisstation ausgetauscht. Von der Netzseite wird eine Zufallszahl Z1 zum Endgerät übertragen. Die Zufallszahl Z1 wird mit Hilfe eines privaten digitalen Schlüssels unterschrieben und zum Mobilfunknetz zurückgesendet. Das Mobilfunknetz prüft mit Hilfe eines zu dem privaten Schlüssel gehörenden öffentlichen Schlüssels ob die Unterschrift echt ist, d.h., dass tatsächlich das Endgerät eines ganz bestimmten Teilnehmers beteiligt gewesen ist.

Andere Algorithmen, die im GSM-Mobilfunknetz eingesetzt werden, sind der Algorithmus A5, mit dessen Hilfe die GSM-Gesprächsdaten verschlüsselt werden, und der Algorithmus A8, mit dessen Hilfe ein Sitzungsschlüssel ausgehandelt wird, der dann zur Ausführung des A5 Algorithmus genutzt wird.

Beim erfindungsgemäßen Verfahren wird deshalb eine Mobilfunkverbindung zwischen dem Endgerät des Nutzers des Transportmittels und einem Diensterbringungsrechner des Vermieters aufgebaut. Der Diensterbringungsrechner führt eine Authentifizierung des Nutzers mit Hilfe der im Mobilfunknetz für Mobilfunkverbindungen verfügbares Verfahren aus. Nach der erfolgreichen Authentifizierung ermittelt der Diensterbringungsrechner abhängig vom Kennzeichen des Transportmittels einen Öffnungscode. Der Öffnungscode wird dann über die Mobilfunkverbindung zum Endgerät übertragen und dort ausgegeben, so dass der Nutzer das Codeschloss öffnen kann, um das Transportmittel zu benutzen. Mit der Übertragung des Öffnungscodes beginnt die zu entgeltende Nutzungszeit.

Die Authentifizierungsalgorithmen des Mobilfunknetzes werden also doppelt genutzt, nämlich für die Authentifizierung bei der Mobilkommunikation und für die Authentifizierung bei der Vermietung. Ohne großen Mehraufwand ist für die Vermietung so ein Verfahre zur Authentifizierung verfügbar, das den bisher im Rahmen von Vermietungsverfahren eingesetzten Authentifizierungsverfahren hinsichtlich der Sicherheit gegen Missbrauch weit überlegen ist. Wird ein Handy gestohlen, so braucht der ursprüngliche Nutzer nur seine Rufnummer sperren zu lassen. Dies hat zur Folge, dass auch eine Authentifizierung seiner SIM-Karte bzw. seines Endgerätes nicht mehr möglich ist.

Die Einbeziehung des Mobilfunknetzes ermöglicht es aufgrund der insbesondere in Städten flächendeckend vorhandenen Verfügbarkeit des Mobilfunknetzes, das Transportmittel an einem beliebigen Ort auszuleihen, d.h. nicht nur an öffentlichen Telefonzellen.

Die Erfindung betrifft in einem zweiten Aspekt ein Verfahren zum Übertragen eines durch ein Codeschloss erzeugten Verschlusscodes. Das Verfahren gemäß zweiten Aspekt ist ein Partnerverfahren zu dem Verfahren gemäß erstem Aspekt. Beide Verfahren sind sehr ähnlich und beruhen auf den gleichen Überlegungen.

Beim erfindungsgemäßen Verfahren gemäß zweitem Aspekt wird beim Schließen des Codeschlosses vom Codeschloss ein Verschlusscode ausgegeben. Ein Nutzer des Transportmittels baut wiederum über sein Endgerät eine Mobilfunkverbindung zu dem Diensterbringungsrechner des Vermieters auf. Das Kennzeichen des Transportmittels und der Verschlusscode werden über die Mobilfunkverbindung übertragen. Der Diensterbringungsrechner überprüft den Verschlusscode unter Verwendung des Kennzeichens. Mit Hilfe des Kennzeichens lässt sich nämlich beispielsweise feststellen, welches Codeschloss den Verschlusscode erzeugt hat. Aufgrund der Berechnungsvorschrift für den Verschlusscode kann der Verschlusscode auch von der Seite des Diensterbringungsrechners her überprüft werden. Der Nutzer wird mit Hilfe eines im Mobilfunknetz für die Mobilkommunikation zwischen den Endgeräten verfügbaren Verfahrens authentifiziert. Alternativ kann jedoch auf eine bereits beim Vermieten durchgeführte Authentifizierung zurückgegriffen werden. Bei gültigem Verschlusscode und erfolgreichen Authentifizieren veranlasst der Diensterbringungsrechner bei einer Ausgestaltung, dass die Vergebührung der Nutzung des Transportmittels beendet wird. Außerdem wird ein Bezahlverfahren veranlasst, bei dem der Nutzer für die Nutzung des Transportmittels bezahlen muss.

Durch die Einbeziehung eines Diensterbringungsrechners bei beiden Aspekten der Erfindung lässt sich das jeweilige Verfahren weitgehend oder vollständig automatisieren. Insbesondere ist kein mit Bedienpersonen besetztes Call-Center mehr erforderlich.

Bei einer Ausgestaltung werden die Verfahren gemäß beider Aspekte kombiniert. Dadurch lässt sich das Transportmittel an einem frei wählbaren Ort abstellen und von diesem Ort aus auch wieder vermieten.

Bei einer Weiterbildung des Verfahrens gemäß zweitem Aspekt wird der Standort des Endgerätes durch Feststellung der für die Verbindung verwendeten Mobilfunkbasisstation ermittelt. Mit Hilfe des ermittelten Standortes des Endgerätes wird ein über die Mobilfunkverbindung vom Nutzer angegebener Standort überprüft. Die Vergebührung wird erst beendet, wenn beide Standorte übereinstimmen. Durch diese Maßnahme ist sichergestellt, dass das Transportmittel wieder auffindbar ist. Die Genauigkeit der automatischen Standortermittlung beträgt in Städten wenige hundert Meter. Wird jedoch alternativ ein Verfahren eingesetzt, mit dessen Hilfe sich der Standort des Mobilfunkgerätes sehr genau bestimmen lässt, so muss der Nutzer keine Daten nennen. Die ermittelten Daten lassen sich direkt für ein späteres Wiederauffinden des Transportmittels vermerken. Verfahren, bei denen der Standort sehr genau ermittelt werden kann, beruhen beispielsweise darauf, den Sendepegel des Mobilfunkgerätes an verschiedenen Mobilfunkstationen auszuwerten. Ein weiteres Verfahren benutzt das GPS (Global Positioning System) mit entsprechend ausgestatteten Endgeräten.

Bei einer anderen Weiterbildung des Verfahrens gemäß zweitem Aspekt enthält das Endgerät und eine am Verschlussort des Codeschlosses aufgestellte Einheit eine lokale Schnittstelle. In der Einheit ist der Standort dieser Einheit mit Hilfe von Standortdaten vermerkt. Die Standortdaten werden über die lokale Schnittstelle und die Mobilfunkverbindung zum Diensterbringungsrechner übertragen und dort für ein späteres Wiederauffinden des Transportmittels elektronisch gespeichert. Bei dieser Weiterbildung muss das Verkehrsmittel zwar in der Nähe der Einheit aufgestellt werden, jedoch lässt sich der Standort des Verkehrsmittels sehr genau und sehr sicher bestimmen.

Bei einer nächsten Weiterbildung des Verfahrens nach einem der beiden Aspekte enthalten das Endgerät und das Codeschloss lokale Schnittstellen, d.h. Schnittstellen, die zusätzlich zur Mobilfunkschnittstelle vorhanden sind. Das Kennzeichen, der Verschlusscode oder der Bestätigungscode werden über die lokale Schnittstelle übertragen. Die lokale Schnittstelle arbeitet unabhängig vom Mobilfunknetz, so dass für die Übertragung von Daten über die lokale Schnittstelle keine Gebühren anfallen. Außerdem können während einer bestehenden Mobilfunkverbindung Daten gleichzeitig über die lokale Schnittstelle ausgetauscht werden. Dies ermöglicht es, die Codes ohne Zwischenspeicherung weiterzugeben, so dass ein Missbrauch der Verfahren erschwert wird. Ein fehlerhaftes manuelles Übertragen von Daten wird aufgrund der Verwendung der lokalen Schnittstellen vermieden.

Bei einer anderen Weiterbildung ist die lokale Schnittstelle eine Schnittstelle mit einer Reichweite im Meterbereich, insbesondere mit einer Reichweite von etwa zehn Metern. Die lokale Schnittstelle ist vorzugsweise eine Funkschnittstelle oder eine optisch arbeitende Schnittstelle, die beispielsweise im Infrarotbereich arbeitet. Jedoch lassen sich auch elektrische Leitungen zwischen den lokalen Schnittstellen einsetzen. Werden Schnittstellen verwendet, die gemäß Bluetooth-Standard oder gemäß einem auf diesen Standard aufbauenden Standard arbeiten, so ist gewährleistet, dass eine Vielzahl von Handies mit diesen Schnittstellen ausgerüstet ist bzw. ausgerüstet sein wird. Der Bluetooth-Standard wurde ursprünglich von den Firmen Nokia, Ericsson, IBM, Intel und Toshiba erarbeitet und später von mehr als 200 Firmen anerkannt.

Bei einer nächsten Weiterbildung werden das Kennzeichen, der Öffnungscode, der Bestätigungscode und/oder die Standortdaten elektronisch verschlüsselt. Durch die Verschlüsselung ist ein Missbrauch erschwert, da der Aufbau des Codes schwerer analysiert werden kann. Alternativ oder kumulativ wird das Kennzeichen, der Öffnungscode, der Bestätigungscode und/oder die Standortdaten elektronisch vom jeweiligen Sender unterschrieben. Im Empfänger wird dann die Gültigkeit der Unterschrift überprüft. Zum Verschlüsseln bzw. Unterschreiben werden die aus der Kryptografie bekannten Verfahren eingesetzt, beispielsweise asymmetrische Verschlüsslungsverfahren.

Bei einer nächsten Weiterbildung wird ein elektronisches Bezahlverfahren für die Nutzung des Transportmittels eingesetzt. So wird ein Bezahlverfahren mit Vorauszahlung, d.h. ein sogenanntes Prepaid-Verfahren, oder ein Bezahlverfahren mit Krediteinräumung genutzt, bei dem dem Nutzer später eine Rechnung gestellt wird. Besonders geeignet zum Abrechnen von betragsmäßig vergleichsweise kleinen Nutzungsbeträgen, beispielsweise von nur einigen DM, ist ein Verfahren, bei dem auf der Speicherkarte des Handys ein Geldbetrag gespeichert ist, der entsprechend der Nutzungsgebühr verringert wird. Solche Verfahren wurden bisher nur bei Telefonkarten eingesetzt.

Die Erfindung betrifft außerdem ein Endgerät und einen Diensterbringungsrechner, die in einem der oben genannten Verfahren eingesetzt werden. Damit gelten die oben genannten technischen Wirkungen auch für das Endgerät und den Diensterbringungsrechner.

Im Folgenden werden Ausführungsbeispiele der Erfindung an Hand der beiliegenden Zeichnungen erläutert. Darin zeigen:
- Figur 1: ein zum Vermieten eines Fahrrades genutztes Mobilfunknetz,
- Figur 2: Verfahrensschritte zum Abholen des Fahrrades, und
- Figur 3: Verfahrensschritte zum Abgeben des Fahrrades nach der Nutzung.

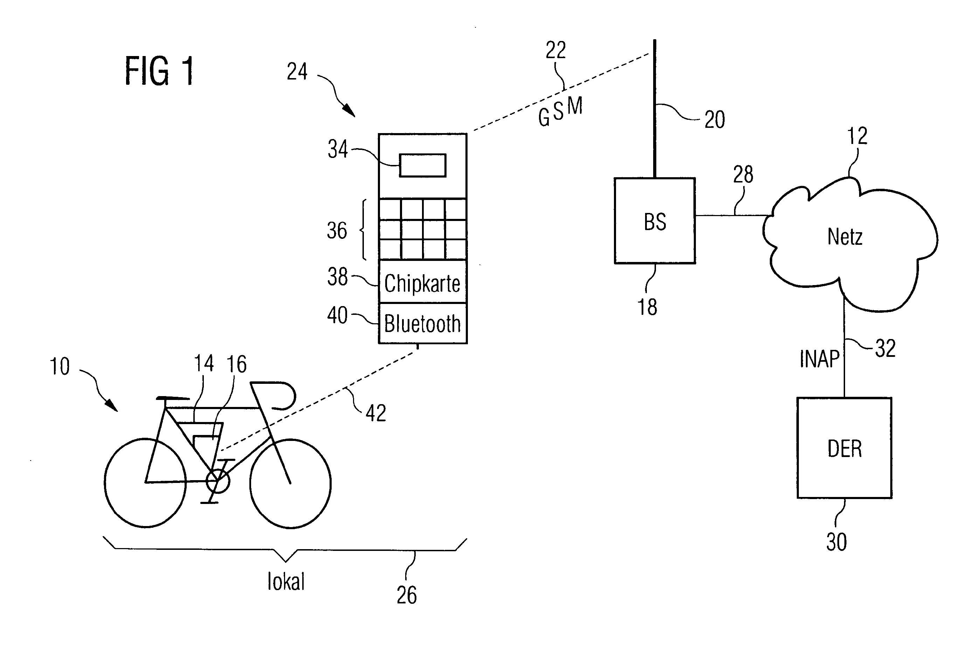

Figur 1 zeigt ein zum Vermieten eines Fahrrades 10 genutztes Mobilfunknetz 12. Das Fahrrad 10 ist ein handelsübliches Fahrrad, das mit einem elektronisch arbeitenden Schloss 14 ausgerüstet ist. Ist das Schloss 14 in einer Verriegelungsstellung, so lassen z.B. sich die Pedale des Fahrrades 10 nicht mehr drehen. Ist das Schloss 14 dagegen entriegelt, so kann mit dem Fahrrad 10 gefahren werden. Das Schloss 14 enthält außerdem eine gemäß Bluetooth-Standard arbeitende Datenübertragungs-Schnittstelle 16.

Das Mobilfunknetz 12 ist beispielsweise das Mobilfunknetz der DeTeMobil, d.h. das D1-Netz in Deutschland. In Figur 1 ist eine Basisstation 18 des Mobilfunknetzes 12 dargestellt. Die Basisstation 18 hat eine Antenne 20, die an dem einen Ende einer Mobilfunkstrecke 22 liegt. Die Mobilfunkstrecke 22 arbeitet bspw. gemäß GSM-Standard. Am anderen Ende der Mobilfunkstrecke 22 befindet sich ein Handy 24, dessen nicht dargestellter Nutzer sich in der Nähe des Fahrrades 10 befindet, siehe Klammer 26. Handy 24 und Fahrrad 10 sind im Ausführungsbeispiel nur bis etwa zehn Meter, vorzugsweise nur einen Meter, voneinander entfernt.

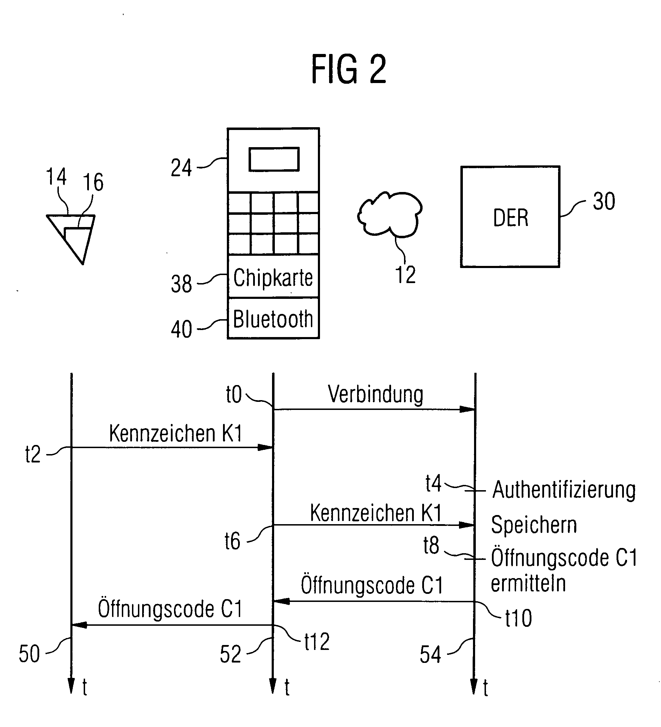

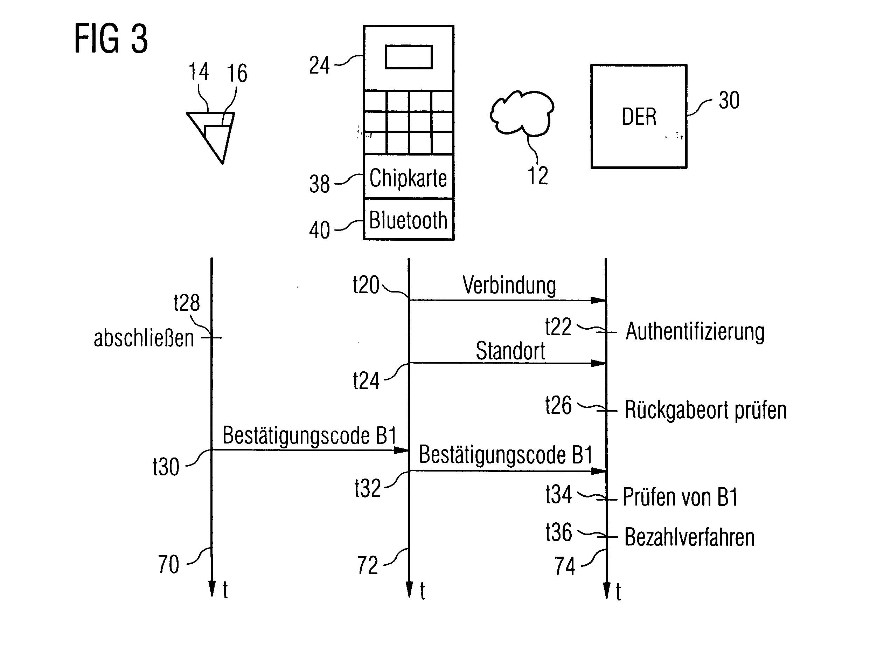

Die Basisstation 18 ist mit dem Mobilfunknetz 12 über eine Leitung 28 verbunden. In Figur 1 ist außerdem ein Diensterbringungsrechner 30 dargestellt, der vom Vermieter des Fahrrades 10 betrieben wird. Im Diensterbringungsrechner 30 sind eine Speichereinheit und ein Prozessor enthalten (nicht dargestellt). Der Diensterbringungsrechner 30 ist an das Mobilfunknetz 12 über eine Leitung 32 angeschlossen. Über die Leitung 32 werden Daten bspw. gemäß INAP (Intelligent Network Application Protocol) übertragen. Alternativ kann auch ein entsprechender Service im Internet verwendet werden, basierend auf dem Internet Protokoll (IP) und einem Server im Internet, z.B. einem WEB-Server. Der Zugang erfolgt in diesem Fall beispielsweise über das WAP (Wireless Application Protokoll). Die mit Hilfe des Diensterbringungsrechner 30 ausgeführten Verfahrensschritte werden unten an Hand der Figuren 2 und 3 näher erläutert.

Das Handy 24 enthält neben einer Mobilfunkschnittstelle eine Anzeigeeinheit 34 zur Darstellung eines Benutzermenüs sowie zur Darstellung der mit Hilfe einer Tastatur 36 eingegebenen Zeichen, z.B. von Rufnummern. Außerdem enthält das Handy 24 eine Chipkarte 38, die auch als SIM-Karte (Subscriber Identity Module) bezeichnet wird. Auf der Chipkarte 38 ist unter anderem die Rufnummer des Handys 24 vermerkt. Weiterhin enthält das Handy 24 eine Speichereinheit und einen Prozessor (nicht dargestellt).

Im Handy 24 befindet sich außerdem eine Bluetooth-Schnittstelle 40, mit deren Hilfe eine lokale Datenübertragungsverbindung 42 zwischen dem Schloss 14 und dem Handy 24 aufgebaut werden kann.

Figur 2 zeigt Verfahrensschritte, die beim Anmieten des Fahrrades 10 ausgeführt werden. Zeitstrahlen 50, 52 und 54 dienen in dieser Reihenfolge zur Darstellung von Vorgängen, die unter Einbeziehung des Schlosses 14, des Handys 24 bzw. des Diensterbringungsrechners 30 durchgeführt werden.

Zu einem Zeitpunkt t0 wählt der Nutzer des Handys 24 die Rufnummer, unter der der Diensterbringungsrechner 30 erreichbar ist, so dass eine Mobilfunkverbindung zwischen dem Handy 24 und dem Diensterbringungsrechner 30 unter Einbeziehung des Mobilfunknetzes 12 aufgebaut wird. Zu einem folgenden Zeitpunkt t2 wird über die Bluetooth-Schnittstellen 16 und 40 vom Schloss 14 zum Handy 24 ein Kennzeichen K1 übertragen, welches das Fahrrad 10 kennzeichnet. Gleichzeitig oder etwas später wird zu einem Zeitpunkt t4 durch den Diensterbringungsrechner 30 ein Authentifizierungsverfahren gemäß GSM-Protokoll durchgeführt, durch das sichergestellt wird, dass die Chipkarte 38 an der Verbindung beteiligt ist. An Hand der auf der Chipkarte 38 gespeicherten Rufnummer R1 des Handys 24 lässt sich der Nutzer des Fahrrades 10 identifizieren.

Zu einem Zeitpunkt t6 wird das Kennzeichen K1 vom Handy 24 zum Diensterbringungsrechner 30 unter Verwendung des Mobilfunknetzes 12 übertragen. Das Kennzeichen K1 wird im Diensterbringungsrechner 30 gespeichert, wobei es den Daten des Nutzers des Handys 24 zugeordnet wird, d.h. insbesondere der Rufnummer R1.

Zu einem Zeitpunkt t8 bestimmt der Diensterbringungsrechner 30 an Hand des Kennzeichens K1 einen Öffnungscode C1. Der Öffnungscode C1 wird zu einem folgenden Zeitpunkt t10 vom Diensterbringungsrechner 30 über das Mobilfunknetz 12 zum Handy 24 übertragen. Das Handy 24 überträgt seinerseits den Öffnungscode C1 zu einem Zeitpunkt t12 über die Bluetooth-Schnittstellen 40 und 16 zum Schloss 14. Nach dem Empfang des Öffnungscodes C1 wird das Schloss 14 entriegelt, so dass der Nutzer des Handys 24 nun auch das Fahrrad 10 nutzen kann. Gleichzeitig mit der Übermittlung des Öffnungscodes C1 an das Handy 24 beginnt die Berechnung eines Nutzungsentgeltes, so wird z.B. die aktuelle Uhrzeit als Startzeit gespeichert.

Figur 3 zeigt Verfahrensschritte beim Zurückgeben des Fahrrades 10 an den Vermieter. Zeitstrahlen 70, 72 und 74 sind in dieser Reihenfolge den Vorgängen im Schloss 14, im Handy 24 bzw. im Diensterbringungsrechner 30 zugeordnet. Der Nutzer des Fahrrades 10 kann das Fahrrad 10 am gleichen Ort zurückgeben, an dem er es abgeholt hat. Jedoch ist auch eine Rückgabe an einem beliebigen anderen Ort möglich. Beschränkungen entstehen nur durch die Vertragsbedingungen zwischen Nutzer und Vermieter bzw. durch die Grenzen des Mobilfunknetzes 12.

Zu einem Zeitpunkt t20 wählt der Nutzer des Handys 24 wiederum die Rufnummer des Diensterbringungsrechners 30. Über das Mobilfunknetz 12 wird eine Verbindung zwischen den Handy 24 und dem Diensterbringungsrechner 30 aufgebaut. Zu einem folgenden Zeitpunkt t22 führt der Diensterbringungsrechner 30 ein Authentifizierungsverfahren gemäß GSM-Standard durch, das sicherstellt, dass tatsächlich die Chipkarte 38 des Handys 24 an der Verbindung beteiligt ist. Es sei angenommen, dass die Authentifizierung fehlerfrei durchgeführt wird.

Zu einem Zeitpunkt t24 sagt der Nutzer des Handys 24 seinen aktuellen Standort durch, d.h. den Standort, an dem er das Fahrrad 10 zurückgeben möchte. Die Spracheingabe wird einer nicht dargestellten Bedienperson des Diensterbringungsrechners 30 mit Hilfe einer Sprachausgabeeinheit angesagt. Die Bedienperson prüft den Rückgabeort, wobei Verfahren eingesetzt werden, die vom Betreiber des Mobilfunknetzes 12 angeboten werden und mit deren Hilfe sich der Standort des Handys 24 grob bestimmen lässt. Es sei angenommen, dass der zum Zeitpunkt t24 durchgesagte Standort in hinreichender Nähe zu dem zum Zeitpunkt t26 ermittelten Standort liegt. Stimmen die Standorte nicht überein, so wird der Nutzer des Handys 24 durch die Bedienperson auf die fehlerhafte Angabe hingewiesen. Übermittelt der Nutzer des Handys 24 anschließend nicht einen zutreffenden Standort, so wird das Rückgabeverfahren abgebrochen.

Zu einem Zeitpunkt t28 verriegelt der Nutzer des Handys 24 das Schloss 14. Daraufhin wird vom Schloss 14 zu einem Zeitpunkt t30 über die Bluetooth-Schnittstellen 16 und 40 ein Bestätigungscode B1 zum Handy 24 übertragen. Der Bestätigungscode B1 ist eine Ziffernfolge, welche das Verriegeln des Schlosses 14 bestätigt.

Zu einem Zeitpunkt t32 wird der Bestätigungscode B1 unter Nutzung des Mobilfunknetzes 12 vom Handy 24 zum Diensterbringungsrechner 30 übertragen. Der Diensterbringungsrechner 30 prüft zu einem Zeitpunkt t34 den Bestätigungscode B1, beispielsweise dadurch, dass nach dem gleichen Verfahren wie im Schloss 14 ein Vergleichs-Bestätigungscode B2 erzeugt wird, der mit dem Bestätigungscode B1 verglichen wird. Stimmen beide Bestätigungscodes B1 und B2 überein, so ist der Bestätigungscode B1 gültig.

Nur wenn beide Bestätigungscodes B1 und B2 gleich sind, wird die Vergebührung der Nutzung des Fahrrades 10 durch den Nutzer des Handys 24 beendet und in einem Verfahrensschritt t36 ein Bezahlverfahren veranlasst, beispielsweise ein Prepaid-Verfahren.

Bei anderen Ausführungsbeispielen wird zwischen den Zeitpunkten t6 und t8 noch eine Kaution mit Hilfe eines elektronischen Bezahlverfahrens eingezogen.

Bei einem nächsten Ausführungsbeispiel muss der Rückgabeort nicht vom Nutzer des Handys 24 durchgesagt werden, sondern wird mit Hilfe eines automatischen Verfahrens hinreichend genau bestimmt. Der Rückgabeort wird im Diensterbringungsrechner 30 vermerkt, um das Fahrrad 10 beispielsweise für Wartungszwecke wieder zu finden. Bedienpersonen sind auf der Seite des Diensterbringungsrechners 30 bei diesem Ausführungsbeispiel nicht erforderlich.

Bei einem weiteren Ausführungsbeispiel wird zum Zeitpunkt t36 ein auf der Chipkarte 38 vermerkter Geldbetrag für die Nutzung des Fahrrades abgerechnet. Dieses Verfahren ist insbesondere für Kleinbeträge, von beispielsweise 10 oder 20 Mark, für eine kurzzeitige Nutzung des Fahrrades geeignet.

Die Schnittstelle zwischen Handy und Benutzer (Man Machine Interface MMI) kann sprachbasiert sein oder auch Techniken wie SMS (Short Massage Service) oder WAP (Wireless Application Protocol) benutzen.

## Patentansprüche

1. Verfahren zum Übertragen eines Öffnungscodes (C1) für ein Codeschloss (14),
bei dem einem Transportmittel (10) ein Kennzeichen (K1) zugeordnet wird, mit dessen Hilfe das Transportmittel (10) von anderen Transportmitteln unterscheidbar ist,
das Transportmittel (10) mit einem Codeschloss (14) versehen wird, das abhängig von einem Öffnungscode (C1) geöffnet werden kann,
ein Nutzer des Transportmittels (10) über sein Endgerät (24) eines Mobilfunknetzes (12) eine Verbindung zu einem Diensterbringungsrechner (30) aufbaut (t0),
das Kennzeichen (K1) über die Verbindung (22) übertragen wird (t6),
der Diensterbringungsrechner (30) eine Authentifizierung des Nutzers mit Hilfe der im Mobilfunknetz (12) verfügbaren Verfahren ausführt (t4),
der Diensterbringungsrechner (30) nach erfolgreicher Authentifizierung abhängig vom Kennzeichen (K1) einen Öffnungscode (C1) ermittelt,
und bei dem der Öffnungscode (C1) über die Verbindung (22) zum Endgerät (24) übertragen und ausgegeben wird (t12).

2. Verfahren zum Übertragen eines durch ein Codeschloss (14) erzeugten Verschlusscodes (B1),
bei dem einem Transportmittel (10) ein Kennzeichen (K1) zugeordnet wird, mit dessen Hilfe es von anderen Transportmitteln unterscheidbar ist,
das Transportmittel (10) mit einem Codeschloss (14) versehen wird,
beim Schließen des Codeschlosses (14) ein Verschlusscode (B1) ausgegeben wird,
ein Nutzer des Transportmittels (10) über sein Endgerät (24) eines Mobilfunknetzes (12) eine Verbindung (22) zu einem Diensterbringungsrechner (30) aufbaut,
das Kennzeichen (K1 und der Verschlusscode (B1) über die Verbindung (22) übertragen wird (t6),
der Diensterbringungsrechner (30) den Verschlusscode (B1) unter Verwendung des Kennzeichens (K1) überprüft,
und bei dem der Nutzer entweder mit Hilfe der im Mobilfunknetz (12) verfügbaren Verfahren authentifiziert wird (t22) oder der Nutzer an Hand des Kennzeichens (K1) ermittelt wird, das dem Nutzer bei der Angabe eines Öffnungscodes (C1) für das Codeschloss (14) nach der Ausführung einer Authentifizierung (t4) gemäß des im Mobilfunknetz (12) verfügbaren Verfahrens zugewiesen worden ist.

3. Verfahren nach Anspruch 2, **dadurch gekennzeichnet,dass** der Diensterbringungsrechner (30) bei gültigem Verschlusscode (B1) und erfolgreicher Authentifizierung (t4, t22) eine Vergebührung der Nutzung des Transportmittels (10) beendet.

4. Verfahren nach Anspruch 2 oder 3, **dadurch gekennzeichnet,dass** der Standort des Endgerätes (24) durch Feststellung der für die Verbindung (22) verwendeten Mobilfunkbasisstation (18) oder durch ein anderes Verfahren ermittelt wird,
und/oder dass mit Hilfe des ermittelten Standortes des Endgerätes (24) ein über die Verbindung (22) übermitteltes Datum (t24) zur Angabe des Standortes des Transportmittels (10) überprüft wird,
und/oder dass mit Hilfe des ermittelten Standortes der Standort des Transportmittels (10) festgestellt und vermerkt wird.

5. Verfahren nach einem der Ansprüche 2 bis 4, **dadurch gekennzeichnet, dass** das Endgerät (24) und eine am Verschlussort des Codeschlosses (14) aufgestellte Einheit eine lokale Schnittstelle (40) enthalten,
dass in der Einheit der Standort der Einheit in Standortdaten vermerkt ist,
und dass die Standortdaten über die lokale Schnittstelle (40) und die Verbindung (22) zum Diensterbringungsrechner (30) übertragen und in einer Speichereinheit vermerkt werden.

6. Verfahren nach einem der vorhergehenden Ansprüche, **dadurch gekennzeichnet, dass** das Endgerät (24) und das Codeschloss (14) lokale Schnittstellen (16, 40) enthalten,
und dass das Kennzeichen (K1 und/oder der Verschlusscode (C1) und/oder der Bestätigungscode (B1) über die lokalen Schnittstellen (16, 40) übertragen werden.

7. Verfahren nach Anspruch 5 oder 6, **dadurch gekennzeichnet, dass** die lokale Schnittstelle (16, 40) eine Schnittstelle mit einer Reichweite im Meterbereich und/oder mit einer Reichweite im Bereich von etwa einem Meter bis etwa zehn Metern ist,
und/oder dass die lokale Schnittstelle (16, 40) eine Funkschnittstelle oder eine optisch arbeitende Schnittstelle ist,
und/oder dass die lokale Schnittstelle (16, 40) gemäß Bluetooth-Standard oder gemäß einem auf dem Bluetooth-Standard aufbauenden Standard arbeitet.

8. Verfahren nach einem der vorhergehenden Ansprüche, **da-durch gekennzeichnet, dass** das Kennzeichen (K1) und/oder der Öffnungscode (C1 und/oder der Bestätigungscode (B1) elektronisch verschlüsselt wird,
und/oder dass das Kennzeichen (K1) und/oder der Öffnungscode (C1) und/oder der Bestätigungscode (B1) elektronisch vom Sender unterschrieben werden, wobei der Empfänger die Gültigkeit der Unterschrift prüft.

9. Verfahren nach einem der vorhergehenden Ansprüche, **dadurch gekennzeichnet, dass** ein elektronisches Bezahlverfahren für die Nutzung des Transportmittels (10) eingesetzt wird (t36),
und/oder dass ein Bezahlverfahren mit Vorauszahlung oder ein Bezahlverfahren mit Krediteinräumung genutzt wird,
und/oder dass beim Bezahlverfahren ein auf einer Speicherkarte (38) des Endgerätes (24) gespeicherter Geldbetrag verringert wird.

10. Endgerät (24),
mit einer Mobilfunkschnittstelle (22),
und mit einer Steuereinheit,
**dadurch gekennzeichnet, dass** die Steuereinheit so aufgebaut ist, dass bei ihrem Betrieb die auf das Endgerät (24) bezogenen Verfahrensschritte nach einem der vorhergehenden Ansprüche ausgeführt werden.

11. Diensterbringungsrechner (30),
mit einer Steuereinheit,
**dadurch gekennzeichnet, dass** die Steuereinheit so aufgebaut ist, dass bei ihrem Betrieb die auf den Diensterbringsrechner bezogenen Verfahrensschritte nach einem der Ansprüche 1 bis 9 ausgeführt werden.
